Europäisches Patentamt

European Patent Office

Office européen des brevets

(11) Publication number: **0 436 236 A1**

# (12) EUROPEAN PATENT APPLICATION

(21) Application number: 90125867.3

(22) Date of filing: 28.12.90

(51) Int. Cl.⁵: **B31B 3/46**, B29C 53/06

(30) Priority: **05.01.90 NO 900059**

(43) Date of publication of application:
**10.07.91 Bulletin 91/28**

(84) Designated Contracting States:
**AT BE CH DE DK ES FR GB GR IT LI LU NL SE**

(71) Applicant: **NORSK HYDRO TECHNOLOGY B.V.**
**P.O. Box 2**
**NL-4540 AA Sluiskil(NL)**

(72) Inventor: **Gronnevik, Oddbjorn**
**Gronsundasen 11**
**N-1360 Nesbru(NO)**

(54) **Equipment for folding and joining boxes made from flat or basically flat materials.**

(57) Equipment for folding and joining boxes being formed from flat or basically flat box materials comprising a device (6) for advancing box materials from a stock or store to a device (8) for pretreating the box materials by heating prior to welding or by application of glue, a device (7) for folding the box materials and holding the box materials in a folded position until the joining operation is ended, and a device (9) for transporting the readily formed boxes to a store or the like.

## Fig.2

The present invention relates to equipment for folding and joining boxes being made from flat or basically flat box materials.

In the applicants Norwegian patent application No. 162335 is described a box for transporting fresh goods such as fresh fish and meat, medicines etc., the box having a double side-, top- and bottom walls of thermo plasctic material, the hollow space between the walls being filled with a air or some other gas. The principal shape of the box is an essentially flat, hollow moulding comprising a rectangular base portion and side portions, and a cover portion which is integrally joined to an extense outwardly from the base portion, whereby the box is formed by folding the side walls along score lines or lines of weakness and joined at the corners by means of welding or the like.

Based on the invention according to the above patent it is an object with the present invention to provide equipment for folding and joining boxes being formed from flat, or basically flat box materials. It is further an object with the present invention to manufacture such equipment as simple and cheap as possible, but still with an efficiency and quality giving high productivity and low wreckage for the readily produced boxes.

The invention is characterized in a first device for advancing the box materials from a store, stock or the like to a second device for pre-treatment of the box materials comprising supply of glue or preheating prior to welding, a third device for folding the box materials and holding these in a folded position until the joining is ended, and a fourth device for ejecting or transporting the readily produced boxes and form the equipment as described in the accompanying claim 1.

The claims 2-7 defines preferred embodiments of the invention.

The invention will now be further described by means of examples and with reference to the drawings in which:

Fig. 1    shows an example of a flat box material which the equipment according to the invention is designed to fold and join.

Fig. 2    shows schematically a side view of the equipment according to the invention.

Fig. 3    shows in a larger scale a part of the equipment shown in Fig. 2, comprising a device for preheating the box materials prior to welding, and

Fig. 4    shows in a larger scale another part of the equipment shown in Fig. 2, comprising a device for folding and joining the box materials.

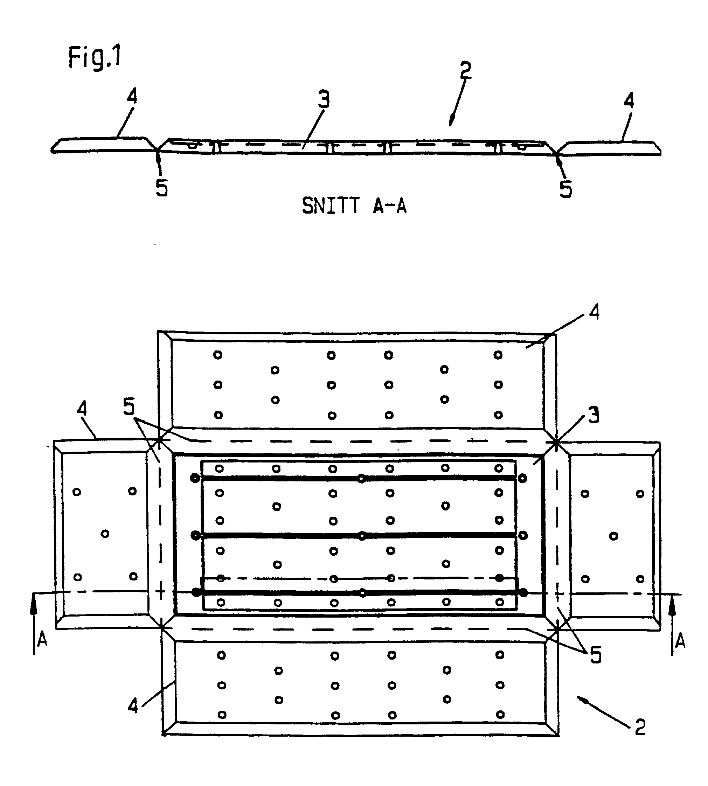

As mentioned above, Fig. 1 shows an example of a flat box material 2 which the equipment according to the invention is designed to fold and join. The box material 2 comprises a rectangular base portion 3 and four side portions 4. Between the bottom portion and side portions are provided lines of weakness or "score lines" in the form of V-shaped grooves 5. The box is formed by folding the side walls along the score lines 5 and thereafter by joining the side walls at the corner of the box. The joining method may, depending on the type of material being used, be done by welding, gluing or the like.

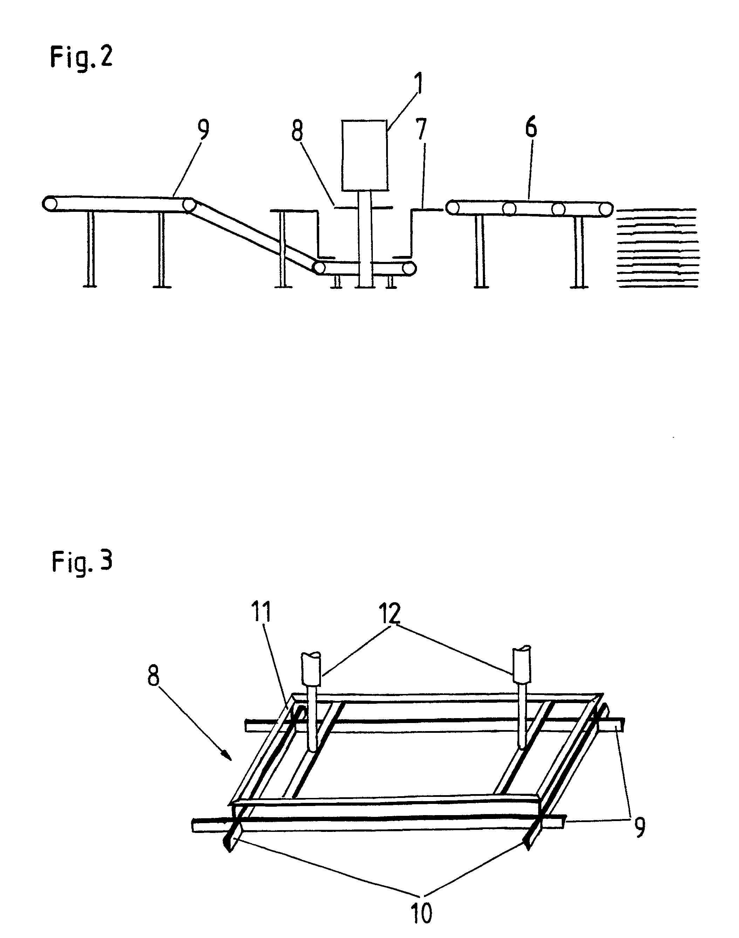

The equipment according to the invention for folding and joining such box materials comprises as shown in Fig. 2 a conveyor device 6, a pre-treatment device 8, a folding device 7 and a conveyor device 9.

The conveyor devices 6 and 9 may preferably be some kind of endless conveyors and will not be further described. However, with regard to the pre-treatment device 5 and the folding device 7, these parts of the equipment will be described in the following.

Fig. 3 shows an enlarged perspective view of the pre-treatment device 8. In order to obtain a clear view the surrounding parts of the equipment are not shown. Neither is shown any details of the pre-treatment device such as electric cables etc.

With regard to the expression "pre-treatment device", this is chosen due to the fact that different devices may be used, depending on the type of joining method being used. In the following example the boxes are made of thermo plastic material and accordingly welding is chosen to be the joining method.

The pre-treatment device 8 consists of heat elements 9,10 which are so designed and disposed that they will fit into the V-formed grooves 5 in the box materials (see Fig. 1). The heating elements are designed to heat (melt) the material in the area/surface of the V-formed grooves, whereby immediately after the heating, by folding and pressing the side walls against one another by the corners of the box, is achieved a welding connection between the bottom and each of the side walls as well as a connection between each of the sides. The heating elements are connected to a frame 11 which in turn may be lowered and lifted by means of pneumatic cylinders 12 or the like. To compensate for any misalignment with regard to the dimentions of the box materials and the displacement of the V-shaped grooves, the heating elements 9,10 can be moved in the transversal as well as the longitudinal direction relative to the frame 11. Thus the heating elements are self-aligning and will ajust themselves in the right position relative to the grooves when the frame is lowered against an underlaying box material.

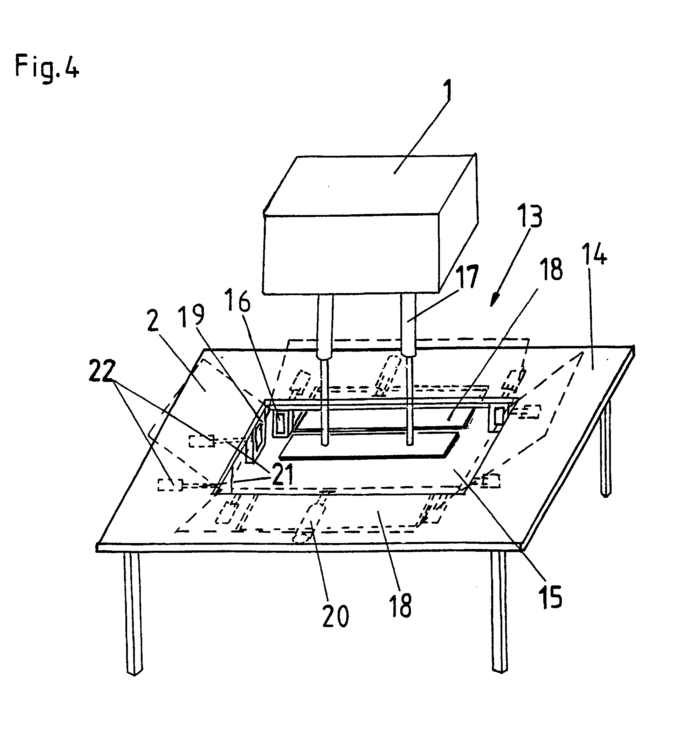

The folding device 7 is disposed under the pre-treatment device 8 and is shown in more detail in Fig. 4. Principally it consists of a table-like construction 13 with a guiding plate 14 which is provided with a rectangular opening 15. The dimensions of the opening is corresponding to the size of the box materials and is somewhat larger than the bottom of these. Immediately under the corners of the opening 15 is provided pressure cushions 16. The cushions 16 are connected to plates 19 which in term are attached to the construction 13 (not further shown).

The equipment according to the invention function as follows:

A box material 2 is moved over the guide plate 14 and is placed in a position above the opening 15 as indicated by the dotted lines in Fig. 4 (the bottom of the box material corresponds to the opening 15). The pre-treatment device 8, i.e. the heat elements 9,10 is thereafter moved to a resting position above the V-formed grooves to heat the material in this area. Stoppers 21, provided at each corner of the opening 15, prevents the box materials to be pressed through the opening during the heating operation. After the heating is ended and the heating elements are lifted to their initial position, the stoppers 21 are withdrawn and the pressure device in the form of pneumatic cylinders 17 or the like which are connected to the upper part of the construction 1, presses the bottom of the box through the opening 15. Hereby the side walls of the box material will be folded inwardly till they touch one another at their ends. Stoppers 18 prevents the readily made box from falling down. As soon as the box is lead through the opening and rests against the stoppers 18, air is supplied to the cushions 16 so that a uniform pressure is supplied against the sides of the box. Thereby is achieved an even distribution of forces acting in the welding zone at the corners of the box. The uniform force distribution provides in turn a sealed connection at the corners of the box.

The box is held in this position until the material in the welding zones at the corners have frozen. Thereafter the air is escaped from the cushion 16, the stoppers 18 are pulled back and the box falls down to an underlaying conveyor 9 (see Fig. 2) and is transported to a store or the like.

With regard to the stoppers 21 and the stoppers I8 these are according to Fig. 4 indicated to be moveably disposed by means of pneumatic cylinders 22 respectively 20. However, it should be noted that other driving means could be used to move the stoppers, such as electric motors with a screw mechanism, electromagnetic devices or the like. This also applies to the other driven devices being used in connection with the equipment.

With regard to the figures it should also be noted that they are only showing the principal design of the invention. Thus the invention, within the frame of the claims, may be subject to modification departing from what is shown in the drawings. Particularly it should be noted with regard to the pre-treatment device 8 shown in Fig. 3, that this can have a different design if another joining method is used. If for instance glueing is used, another application device may be employed such as a brush or the like being moved along guides.

## Claims

1. Equipment for folding and joining boxes being formed from flat or basically flat box materials, **characterized in that** a device (6) for advancing box materials from a stock or store to a device (8) for pretreating the box materials by heating prior to welding or by application of glue, a device (7) for folding the box materials and holding the box materials in a folded position until the joining operation is ended, and a device (9) for transporting the readily formed boxes to a store or the like.

2. Equipment according to claim 1, **characterized in that** the pretreatment device (8) are heating elements (9,10) which are provided to be moved into direct contact with the areas of the box materials to be joined by welding.

3. Equipment according to claim 1 and 2, **characterized in that** the pretreatment device (8) is disposed directly above the folding device (7), whereby the box materials are provided to heat the welding zones by being lowered on to the box materials immediately before folding.

4. Equipment according to claims 1-3, **characterized in that** the folding device is in the form of a table-like construction (13) with a guiding plate (14) being provided with a rectangular opening (5) corresponding to the size of the box material to be folded, whereby the folding is accomplished by placing the box material with the bottom section above the opening and thereafter pressing the box material through the opening by means of a pressing device (17) until the bottom of the box strikes stopper (18).

5. Equipment according to claims 1-4, **characterized in that** pressure cushions (16) are provided directly under the corners of the opening (15), one on each side of the corners or one in the middle of each corner, which cushions are designed to press the side walls against one another to obtain uniform pressure in the joining zones at the corners of the folded box.

6. Equipment according to claims 1-5, **characterized in that** the cushions (16) are provided with wear plates.

7. Equipment according to claims I-6, **characterized in that** the finished boxes are transported away from the equipment, by retracting the stoppers (18) so that the boxes fall down onto an endless conveyor being provided underneath the equipment.

Fig.1

SNITT A-A

Fig. 2

Fig. 3

**Fig.4**

# European Patent Office

## EUROPEAN SEARCH REPORT

Application Number

**EP 90 12 5867**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 308 493 (SEKISUI)<br>* Claim 1; fig. * | 1-4 | B 31 B<br>3/46<br>B 29 C 53/06 |
| A | DE-B-1 218 139 (ESTA)<br>* Column 4, lines 30-47; fig. * | 1 | |
| A | US-A-4 345 905 (MOEN)<br>* Abstract; fig. * | 5-7 | |
| A | US-A-3 376 796 (GORDON) | 5 | |
| A | GB-A-9 600 66 (STEIGER) | | |
| A | GB-A-9 001 18 (CLELAND) | | |
| A | US-A-4 522 618 (STANNARD) | | |
| A | DE-B-1 251 642 (BIRK) | | |
| A | GB-A-1 130 241 (PALSON) | | TECHNICAL FIELDS SEARCHED (Int. Cl.5) |
| A | GB-A-1 043 711 (PARNALL) | | B 31 B<br>B 29 C |
| A | GB-A-9 890 88 (STEIGER) | | |
| A | FR-A-1 567 099 (PALSON) | | |
| A | US-A-2 829 569 (AQUILLA) | | |

The present search report has been drawn up for all claims

| Place of search | Date of completion of search | Examiner |
|---|---|---|
| The Hague | 28 March 91 | PEETERS S. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document